# NEUE EUROPÄISCHE PATENTSCHRIFT

(11) **EP 0 933 262 B2**
(45) Veröffentlichungstag und Bekanntmachung des Hinweises auf die Entscheidung über den Einspruch: **04.10.2006**
(45) Hinweis auf die Patenterteilung: 19.03.2003
(21) Anmeldenummer: 98122592.3
(22) Anmeldetag: 04.12.1998
(51) Int. Cl.: B60R 21/13

(54) **Cabriolet mit Kopfstütze und Überrollschutz an mindestens einem Sitz**
Convertible with headrest and rollbar on at least one seat
Cabriolet équipé d'un appui-tête et d'un arceau de sécurité sur au moins un siège

(30) Priorität: 29.01.1998 DE 19803398
(43) Veröffentlichungstag der Anmeldung: 04.08.1999
(73) Patentinhaber: Volkswagen Aktiengesellschaft, 38436 Wolfsburg (DE)
(72) Erfinder: Thill, Albert, Dipl.-Ing., 38554 Weyhausen (DE)
(74) Vertreter: Schneider, Henry

(56) Entgegenhaltungen:
- EP-A- 0 752 344
- DE-A- 3 822 461
- DE-A- 3 903 459
- DE-A- 3 922 509
- DE-A- 3 927 265
- DE-A- 4 017 778
- DE-C- 2 513 022
- "ADVERTISEMENT" REVUE AUTOMOBILE, Bd. 87, Nr. 25, 18. Juni 1992, Seite 7 XP000275379

## Beschreibung

Die Erfindung betrifft ein Cabriolet mit mindestens einem Sitz und einem dahinter angeordneten Überrollschutz, dessen oberes Ende in einer Ausgangsstellung unmittelbar hinter einer höhenverstellbaren Kopfstütze des Sitzes angeordnet ist, wobei die Kopfstütze und das obere Ende des Überrollschutzes in Bezug zueinander verschiebbar sind, um bei einer Aktivierung des Überrollschutzes oder einer Höhenverstellung der Kopfstütze aus der Ausgangsstellung eine Relativbewegung zwischen dem oberen Ende des Überrollschutzes und der Kopfstütze zu ermöglichen.

Aus der DE 38 22 461 C2 ist ein Cabriolet der eingangs genannten Art bekannt, bei dem der Überrollschutz von einem hinter dem Fahrzeugsitz angeordneten und am Fahrzeugboden abgestützten U-förmigen Überrollbügel gebildet wird, dessen Schenkel als Führung für die höhenverstellbare Kopfstütze des Sitzes dienen. Die mit dem Überrollbügel kombinierte Kopfstütze weist in ihrem nach hinten versetzten Unterteil zwei vertikale Hülsenstücke auf, durch welche sich die beiden Schenkel des Überrollbügels nach oben erstrekken. Das obere Ende des Überrollbügels wird von einem Joch gebildet, das oberhalb des Unterteils der Kopfstütze in einem geringen Abstand hinter deren nach vorne versetztem Oberteil angeordnet ist, so daß es bei einer Aktivierung des Überrollschutzes bezüglich der Kopfstütze nach oben in seine am weitesten ausgefahrene Position verschoben werden kann. Zwischen der Rückseite der Kopfstütze und dem Joch wird ein durchgehender Spalt gebildet, der zum einen ein Eindringen von Staub oder Schmutzpartikeln während der Fährt aufgrund der Verwirbelung der Luft hinter dem oberen Teil der Kopfstütze gestattet und zum anderen eine optisch ansprechende Gestaltung der Kopfstütze und des Überrollbügels verhindert. Außerdem muß durch die Anbringung der Kopfstütze am Überrollbügel ein größerer logistischer Aufwand getrieben werden, um sicherzustellen, daß zum Beispiel die Bezüge der Kopfstütze und des Sitzes zusammenpassen.

Aus der DE 39 22 509 C2 ist darüber hinaus ein Überrollbügel für Kraftfahrzeuge bereits bekannt, der hinter den Rücksitzlehnen angeordnet ist und eine von diesen getrennte Kopfstütze trägt, die bei abgesenktem Überrollbügel nicht sichtbar ist und bei ausgefahrenem Überrollbügel ohne Zwischenraum an die Rücksitzlehne anschließt. Diese Konstruktion weist den Nachteil auf, daß der Kopf nur nach dem Hochfahren des Überrollbügels abgestützt wird, nicht jedoch bei einem Frontalaufprall oder dergleichen.

Weiter sind aus der DE 39 03 459 A1 und aus der DE 39 30 171 C2 bereits ein Kraftwagen in Cabrio-Bauweise mit einem Überrollschutz bzw. ein in einem Fahrzeugsitz angeordneter Überrollschutz bekannt, bei denen das obere Ende des Überrollschutzes innerhalb einer Kopfstütze des Sitzes untergebracht und aus dieser heraus nach oben verschiebbar ist. Die Kopfstütze und das obere Ende des Überrollschutzes wirken dadurch in der abgesenkten Ausgangsstellung des letzteren optisch wie ein Bauteil. Jedoch müssen Sitze mit integriertem Überrollschutz sehr stabil ausgebildet und beispielsweise im Bereich des Schwenkgelenks zwischen der Rückenlehne und dem Sitzteil verstärkt werden, um bei einem Überschlag des Fahrzeugs auf den Überrollschutz einwirkende Kräfte aufzunehmen. Außerdem müssen auch die Mechanismen zum Aktivieren und Ausfahren des Überrollschutzes innerhalb des Sitzes untergebracht werden, was in Verbindung mit der verstärkten Konstruktion insbesondere im Hinblick auf einen Ein- und Ausbau des Sitzes zu Platz- und Gewichtsproblemen führen kann.

Weitere Fahrzeugsitze mit integriertem Überrollschutz sind aus der DE 42 37 348 A1 und aus der DE 39 27 265 A1 bekannt.

Ausgehend hiervon liegt der Erfindung die Aufgabe zugrunde, bei einem Cabriolet der eingangs genannten Art ohne eine Integration der Kopfstütze in den Überrollschutz in der Ausgangsstellung die abgesenkte Kopfstütze und das obere Ende des nicht ausgefahrenen Überrollschutzes als kompakte Struktur auszubilden, so daß eine optisch ansprechende Gestaltung möglich ist und vorzugsweise das Eindringen von Staub oder Schmutzpartikeln zwischen die Kopfstütze und das ober Ende des Überrollschutzes verhindert wird.

Diese Aufgabe wird erfindungsgemäß durch ein Cabriolet mit den in Anspruch 1 genannten Merkmalen gelöst. Insbesondere dadurch, daß die Kopfstütze mit dem Sitz verbunden ist, und daß eine in seitlicher und vertikaler Richtung durchgehende Trennfuge zwischen der Kopfstütze und dem oberen Ende des Überrollschutzes einen dreidimensionalen Verlauf aufweist, so daß kein Durchblick zwischen der Kopfstütze und dem benachbarten oberen Ende des Überrollschutzes möglich ist.

Die Kontaktlinie zwischen der Kopfstütze und dem oberen Ende des Überrollschutzes erstreckt sich entlang eines nach hinten über die Kopfstütze auskragenden Vorsprungs, der den Überrollschutz zweckmäßig an dessen seitlichen und oberen Begrenzungen teilweise überlappt und sich vorzugsweise nach hinten zu verjüngt, wobei sein hinteres Ende gegen den Überrollschutz anliegt. Der Vorsprung besteht bevorzugt aus einem weichen-verformbaren Material und zweckmäßigerweise aus dem vom Kopfstützenbezug umhüllten Polstermaterial der Kopfstütze, so daß derjenige Teil des Vorsprungs, der den Überrollschutz auf dessen Oberseite überlappt, vom oberen Ende des Überrollschutzes leicht beiseite gedrückt werden kann, wenn dieser bei einem Unfall aktiviert und ausgefahren wird.

Der Erfindung liegt der Gedanke zugrunde, daß sich mit Hilfe der dreidimensionalen, das heißt nicht in einer Ebene liegenden, durchgehenden Trennfuge die Kopfstütze und das obere Ende des Überrollschutzes trotz funktionaler Trennung der beiden Komponenten so anordnen lassen, daß eine für einen Betrachter optisch kompakt wirkende Einheit gebildet wird, ohne die Relativbeweglichkeit zwischen den beiden Komponenten zu beeinträchtigen. Durch die erfindungsgemäße Ausgestaltung der Trennfuge kann diese ohne eine sichtbare Trennung zwischen der Kopfstütze und dem oberen Ende des Überrollschutzes und ohne Rücksicht auf Montagetoleranzen eine gewisse Fugendicke aufweisen, die trotz einer optisch kompakten Struktur eine ungehinderte Relativbewegung der beiden Komponenten sicherstellt. Die Trennfuge weist angrenzend an sichtbare Begrenzungen der Kopfstütze und des Überrollschutzes zweckmäßig eine kleinere Fugendicke auf als in einem dazwischen angeordneten unteren Mittenbereich, um dort ggf. Platz für eine Halterung der Kopfstütze zu schaffen.

Um die Unauffälligkeit der Trennfuge weiter zu verbessern und zudem das Eindringen von Schmutz zwischen die Kopfstütze und das obere Ende des Überrollschutzes zu verhindern, sieht eine weitere bevorzugte Ausgestaltung der Erfindung darüber hinaus vor, daß die Kopfstütze und der Überrollschutz an ihren sichtbaren Begrenzungen entlang der Trennfuge gegeneinander anliegen, wobei sie sich vorzugsweise im wesentlichen nur entlang einer Linie berühren, um eine Reibung zwischen der Kopfstütze und dem oberen Ende des Überrollschutzes und damit im Laufe der Zeit Verschleißspuren an der weicheren Komponente zu vermeiden.

Im folgenden wird die Erfindung anhand eines in der Zeichnung dargestellten Ausführungsbeispiels näher erläutert. Es zeigen:
- Fig. 1:: eine perspektivische Ansicht eines Teils eines erfindungsgemäßen Cabriolets mit seiner Rücksitzbank;
- Fig. 2:: eine Ansicht entsprechend Fig. 1, jedoch mit ausgefahrener Kopfstütze an einem der beiden Sitze;
- Fig. 3:: eine teilweise weggebrochene Schnittansicht der Kopfstütze und des oberen. Teils des Überrollschutzes entlang der Linie A-A der Fig. 2;
- Fig. 4:: eine teilweise weggebrochene Schnittansicht der Kopfstütze und des oberen Teils des Überrollschutzes entlang der Linie B-B der Fig. 2;
- Fig. 5:: eine perspektivische Phantomdarstellung der Kopfstütze und des oberen Endes des Überrollschutzes mit einem im Inneren angeordneten federbelasteten Überrollbügel.

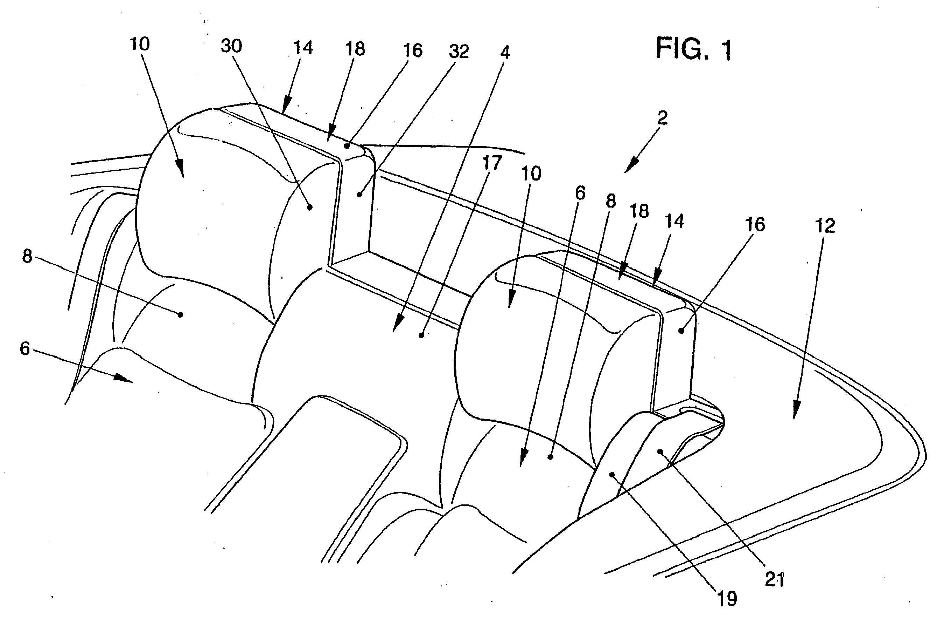

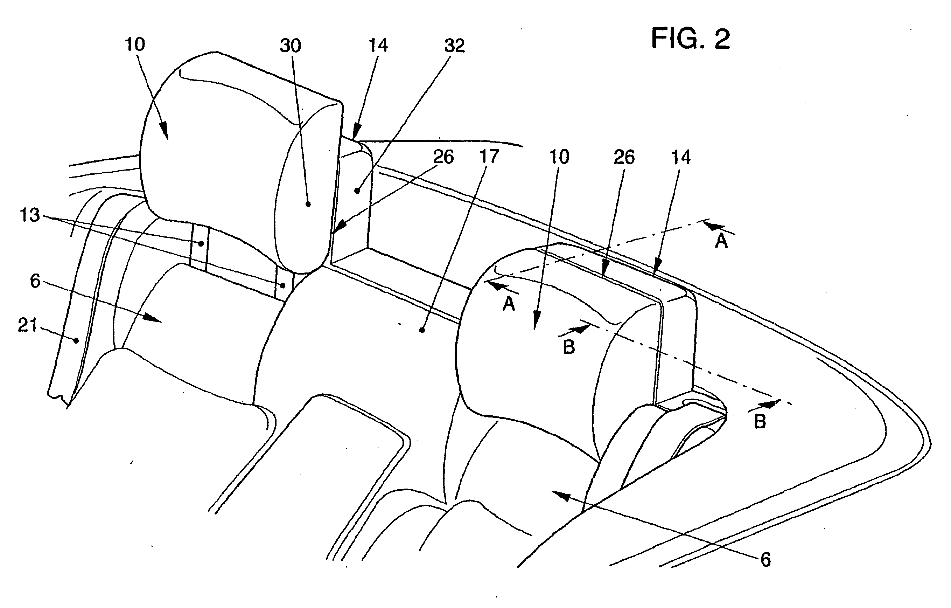

Das in den Figuren 1 und 2 der Zeichnung teilweise dargestellte viersitzige Cabriolet 2 weist eine Rücksitzbank 4 mit zwei Sitzen 6 auf, deren Rückenlehnen 8 jeweils mit einer integrierten ausfahrbaren Kopfstütze 10 versehen sind. Die Kopfstützen 10 stehen in ihrer unteren Ausgangsstellung (Fig. 1 und Fig. 2 rechts) teilweise über eine die Rücksitze 6 umgebende Abdekkung 12 über, unter der sich ein abgesenktes Verdeck des Cabriolets 2 verbirgt.

Bei Belastung des Sitzteils eines Sitzes 6 mit einer Gewichtskraft von etwa 25 kg wird die zugehörige Kopfstütze 10 zusammen mit ihrer aus zwei Tragestützen 13 bestehenden Halterung von einem in oder hinter der Rückenlehne 8 angeordneten Antrieb (nicht dargestellt) vertikal in eine obere Fahrtstellung (Fig. 2 links) ausgefahren, wobei ihre Höhe in der Fahrtstellung zur Anpassung an die Größe des jeweiligen Fahrzeuginsassen einstellbar ist. Dadurch, daß sich die Kopfstützen 10 normalerweise in der eingefahrenen Ausgangsstellung befinden und nur ausgefahren werden, wenn der zugehörige Rücksitz 6 besetzt wird, können bei unbesetzten Rücksitzen 6 die Windgeräusche während der Fahrt vermindert und zudem eine stärkere Verschmutzung der Kopfstützen 10 durch Insekten oder Schmutzpartikel weitgehend verhindert werden.

In der Ausgangsstellung sind die unteren Enden der Kopfstützen 10 unterhalb der Abdeckung 12 in einer Aussparung 15 versenkt, die In seitlicher Richtung von einem mittleren Rückenlehnentell 17 bzw. einer Seitenwange 19 begrenzt wird, in der ein Aufrollmechanismus für einen Sicherheitsgurt 21 des jeweiligen Rücksitzes 6 angeordnet ist.

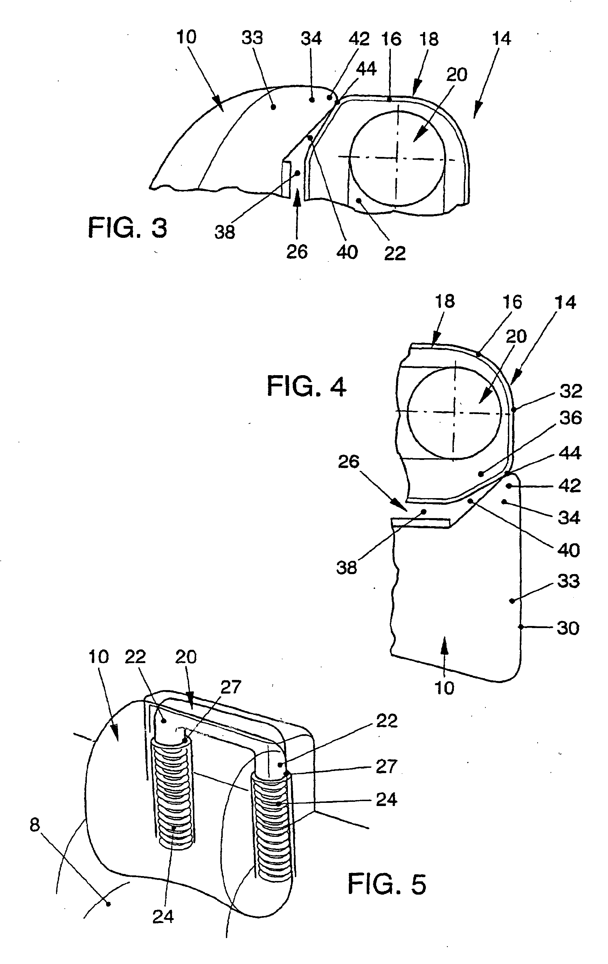

Hinter jeder Rückenlehne 8 ist jeweils ein fahrzeugfester Überrollschutz 14 angeordnet, dessen oberes, mit einer äußeren Verkleidung 16 versehenes Ende 18 in der Ausgangsstellung des Überrollschutzes 14 (Fig. 1 und 2), d.h. in nicht aktiviertem Zustand, unmittelbar hinter der benachbarten Kopfstütze 10 angeordnet ist. Bei einem Unfall, der ein Überschlagen des Cabriolets 2 zur Folge hat, wird der Überrollschutz 14 beider Sitze 6 durch einen nicht dargestellten Auslösemechänismus aktiviert. Dabei wird ein innerhalb der Verkleidung 16 jedes Überrollschutzes 14 angeordneter Überrollbügel 20 (Fig. 5) in Form eines langgestreckten umgekehrten U von zwei die hohlen Schenkel 22 des Bügels 20 umgebenden vorgespannten Schraubendruckfedem 24 nach oben in eine ausgefahrene Überrollstellung (nicht dargestellt) gedrückt, in der die Oberseite der Verkleidung 16 die Oberseite der Kopfstütze 10 überragt. Die entgegengesetzten Enden der Schraubendruckfedern 24 stützen sich jeweils am unteren Ende der Schenkel 22 gegen ein fahrzeugfestes Widerlager und an ihrem oberen Ende gegen eine Ringschulter 27 des jeweiligen Schenkels 22 ab, der auf einem in seinem Inneren angeordneten Führungsrohr (nicht dargestellt) vertikal verschiebbar geführt ist.

Um bei feststehendem oberen Ende 18 des Überrollschutzes 14 das Ausfahren der Kopfstütze 10 in die Fahrtstellung bzw. bei feststehender Kopfstütze 10 das Ausfahren des Überrollschutzes 14 in die Überrollstellung zu ermöglichen, sind die Kopfstütze 10 und das obere Ende 18 des Überrollschutzes 14 durch eine in seitlicher und vertikaler Richtung durchgehende Trennfuge 26 zwischen der Rückseite der Kopfstütze 10 und der Vorderseite der Verkleidung 16 getrennt, die eine ungehinderte vertikale Relativbewegung der beiden Komponenten 10, 14 in Bezug zueinander gestattet. Die auf dem oberen Ende 18 des Überrollschutzes 14 angeordnete Verkleidung 16 steht in Ausgangsstellung genau so weit wie die Kopfstütze 10 über die umgebende Abdeckung 12 über, so daß die abgeflachten horizontalen Oberseiten der Kopfstütze 10 und der Verkleidung 16 in dieser Stellung im wesentlichen miteinander fluchten. Außerdem weisen die Verkleidung 16 und die Kopfstütze 10 entgegengesetzte seitliche Begrenzungen 30, 32 auf, die jeweils in der gleichen, zur Fahrtrichtung parallelen Vertikalebene angeordnet sind, so daß trotz der funktionalen Trennung der Kopfstütze 10 und des verkleideten oberen Endes 18 des benachbarten Überrollschutzes 14 für einen Betrachter der Eindruck einer zusammengehörigen Einheit entsteht, was zum Beispiel durch eine angepaßte oder übereinstimmende Farbgebung bzw. Oberflächenbeschaffenheit des Materials eines Bezugs der Kopfstütze 10 und der Verkleidung 16 noch unterstützt werden kann.

Um das optische Erscheinungsbild einer kompakten geschlossenen Einheit auch bei näherer Betrachtung aufrechtzuerhalten, weist die Trennfuge 26 zwischen der Rückseite der Kopfstütze 10 und der Vorderseite der Verkleidung 16 einen dreidimensionalen Verlauf auf, so daß in seitlicher und vertikaler Richtung kein Durchblick zwischen der Kopfstütze 10 und dem oberen Ende 18 des Überrollschutzes 14 möglich ist.

Wie am besten in den Figuren 3 und 4 dargestellt, weist ein Polster 33 der Kopfstütze 10 einen nach hinten überstehenden, im Querschnitt dreieckigen Vorsprung 34 auf, der eine benachbarte abgeschrägte Ekke 36 der Verkleidung 16 überlappt, so daß sich die Trennfuge 26 aus einem quer zur Fahrtrichtung verlaufenden unteren Mittelteil 38, sowie einem an beiden Seiten und oben um den Mittelteil 38 umlaufenden, schräg nach hinten ausgerichteten Randteil 40 zusammensetzt.

Um in der Ausgangsstellung das Eindringen von Schmutz zwischen die Kopfstütze 10 und die Verkleidung 16 zu verhindern und ein noch geschlosseneres Erscheinungsbild zu gewährleisten, ohne die Beweglichkeit der beiden Komponenten 10, 14 in Bezug zueinander zu beeinträchtigen, liegt der Vorsprung 34 in der Nähe seiner Spitze 42 entlang eines schmalen, im wesentlichen linienförmigen Kontaktes 44 gegen die Verkleidung 16 an, wobei sich der Kontakt 44 in einem geringen Abstand von den vertikalen seitlichen bzw. horizontalen oberen Begrenzungen der Kopfstütze 10 und der Verkleidung 16 über deren gesamte Höhe bzw. Breite erstreckt, so daß die Trennfuge 26 nahezu unsichtbar ist.

Von der Kontaktlinie aus erweitert sich der Randteil 40 der Trennfuge 26 nach innen zu in Richtung ihres Mittelteils 38 allmählich, wo der Abstand zwischen der Rückseite der Kopfstütze 10 und der Vorderseite der Verkleidung 16 und damit die Fugendicke am größten ist.

Während beim Ausfahren der Kopfstütze 10 der Linienkontakt 44 zwischen der Kopfstütze 10 und der Verkleidung 16 entlang der seitlichen Begrenzungen 30 erhalten bleibt, öffnet sich an der Oberseite 25 der Kopfstütze 10 und der Verkleidung 16 die Trennfuge 26, jedoch ist dies nurvon hinten sichtbar, während bei Betrachtung von vorne der geschlossene Gesamteindruck im wesentlichen erhalten bleibt.

Bei einer Aktivierung des Überrollschutzes 14 werden die vorgespannten Schraubendruckfedern 24 vom Auslösemechanismus freigegeben, so daß sie den Überrollbügel mit hoher Geschwindigkeit auf den Führungsrohren in den Schenkeln 22 nach oben in die Überrollstellung drücken, in der sein oberes verkleidetes Ende 18 die Kopfstütze 10 überragt. Dabei wird der Vorsprung 34 an der Oberseite der Kopfstütze 10 verformt und zur Seite gedrückt, ohne daß wegen der leichten Verformbarkeit des Polstermaterials 33 die Bewegung des Überrollschutzes 14 beeinträchtigt wird.

## Patentansprüche

1. Cabriolet mit mindestens einem Sitz (6), einem dahinter angeordneten Überrollschutz (14) und mit einer unabhängig von dem Überrollschutz (14) höhenverstellbaren Kopfstütze (10), wobei ein oberes Ende (18) des Überrollschutzes (14) in einer Ausgangsstellung hinter einer Kopfstütze (10) des Sitzes angeordnet ist und wobei die Kopfstütze (10) und das obere Ende (18) der Überrollschutzes (14) in Bezug zueinander verschiebbar sind, um bei einer Aktivierung des Überrollschutzes (14) oder einer Höhenverstellung der Kopfstütze (10) aus der Ausgangsstellung heraus eine Relativbewegung zwischen dem oberen Ende (18) des Überrollschutzes (14) und der Kopfstütze (10) zu ermöglichen, **dadurch gekennzeichnet, dass** die Kopfstütze (10) mit dem Sitz verbunden ist und dass eine in seitlicher und vertikaler Richtung durchgehende Trennfuge (26) zwischen der Kopfstütze (10) und dem oberen Ende (18) des Überrollschutzes (14) einen derartigen dreidimensionalen Verlauf aufweist, dass kein Durchblick zwischen der Kopfstütze (10) und dem benachbarten oberen Ende (18) des Überrollschutzes (14) möglich ist, wobei die Kopfstütze (10) mindestens entlang eines Teils ihrer äußeren oberen Begrenzung (30) einen nach hinten auskragenden Vorsprung (34) aufweist, der einen Teil des oberen Endes (18) des Überrollschutzes (14) im Wesentlichen horizontal überlappt.

2. Cabriolet nach Anspruch 1, **dadurch gekennzeichnet, dass** die Trennfuge (26) angrenzend an sichtbare äußere Begrenzungen (30, 32) der Kopfstütze (10) und des oberen Endes (18) des Überrollschutzes (14) eine kleinere Fugendicke aufweist als in einem dazwischen angeordneten inneren Bereich (38).

3. Cabriolet nach Anspruch 1 oder 2, **dadurch gekennzeichnet, dass** die Kopfstütze (10) und das oberen Ende (18) des Überrollschutzes (14) an ihren sichtbaren Begrenzungen (30, 32) entlang der Trennfuge (26) gegeneinander anliegen.

4. Cabriolet nach einem der Ansprüche 1 bis 3, **dadurch gekennzeichnet, dass** die Kopfstütze (10) und das oberen Ende (18) des Überrollschutzes (14) im Wesentlichen über die gesamte Höhe die gleiche Breite aufweisen.

5. Cabriolet nach einem der Ansprüche 1 bis 4, **dadurch gekennzeichnet, dass** die Kopfstütze (10) mindestens entlang eines Teils ihrer äußeren seitlichen Begrenzungen (30) einen nach hinten auskragenden Vorsprung (34) aufweist, der einen Teil des oberen Endes (18) des Überrollschutzes (14) im Wesentlichen vertikal überlappt.

6. Cabriolet nach einem der Ansprüche 1 bis 5, **dadurch gekennzeichnet, dass** der Vorsprung (34) mindestens entlang der Oberseite der Kopfstütze (10) verformbar ist und dass sich das obere Ende (18) des Überrollschutzes (14) bei dessen Aktivierung unter Verformung des Vorsprungs (34) nach oben bewegt, bis es die Kopfstütze (10) überragt.

7. Cabriolet nach einem der Ansprüche 1 bis 6, **dadurch gekennzeichnet, dass** sich der Vorsprung (34) nach hinten verjüngt.

8. Cabriolet nach einem der Ansprüche 1 bis 7, **dadurch gekennzeichnet, dass** der Vorsprung (34) an oder in der Nähe seines hinteren Endes gegen das obere Ende (18) des Überrollschutzes (14) anliegt.

9. Cabriolet nach einem der Ansprüche 1 bis 8, **dadurch gekennzeichnet, dass** das obere Ende (18) des Überrolischutzes (14) mit einer Verkleidung (16) versehen ist.

10. Cabriolet nach einem der Ansprüche 1 bis 9, **dadurch gekennzeichnet, dass** die Kopfstütze (10) bei Überschreiten einer vorgegebenen Gewichtskraft auf ein Sitzteil des Sitzes (6) ausgefahren wird.

11. Cabriolet nach einem der Ansprüche 1 bis 10, **dadurch gekennzeichnet, dass** der Überrollschutz (14) hinter dem Sitz (6) und von diesem getrennt verankert ist.

12. Cabriolet nach einem der Ansprüche 1 bis 11, **dadurch gekennzeichnet, dass** die Kopfstütze (10) in die Rückenlehne (8) des Sitzes (6) integriert ist.

## Claims

1. Convertible with at least one seat (6), a rollbar (14) arranged behind it, and with a headrest (10) which can be adjusted in height independently of the rollbar (14), an upper end (18) of the rollbar (14) being arranged, in a starting position, behind a headrest (10) of the seat, and the headrest (10) and the upper end (18) of the rollbar (14) being displaceable with respect to each other in order, when the rollbar (14) is activated or when the headrest (10) is adjusted in height from the starting position, to permit a relative movement between the upper end (18) of the rollbar (14) and the headrest (10), **characterized in that** the headrest (10) is connected to the seat, and **in that** a separating gap (26), which is continuous in the lateral and vertical direction, between the headrest (10) and the upper end (18) of the rollbar (14) has a three-dimensional profile in such a manner that no view is possible between the headrest (10) and the adjacent upper end (18) of the rollbar (14), the headrest (10) having, at least along part of its outer upper boundary (30), a projection (34) which projects to the rear and overlaps part of the upper end (18) of the rollbar (14) essentially horizontally.

2. Convertible according to Claim 1, **characterized in that** the separating gap (26) has a smaller gap thickness adjacent to visible outer boundaries (30, 32) of the headrest (10) and of the upper end (18) of the rollbar (14) than in an inner region (38) arranged in between.

3. Convertible according to Claim 1 or 2,
**characterized in that** the headrest (10) and the upper end (18) of the rollbar (14) bear against each other along the separating gap (26) by means of their visible boundaries (30, 32).

4. Convertible according to one of Claims 1 to 3, **characterized in that** the headrest (10) and the upper end (18) of the rollbar (14) are the same width essentially over the entire height.

5. Convertible according to one of Claims 1 to 4, **characterized in that** the headrest (10) has, at least along part of its outer lateral boundaries (30), a projection (34) which projects to the rear and overlaps part of the upper end (18) of the rollbar (14) essentially vertically.

6. Convertible according to one of Claims 1 to 5, **characterized in that** the projection (34) is deformable at least along the upper side of the headrest (10), and **in that** the upper end (18) of the rollbar (14), when the latter is activated, moves upwards deforming the projection (34) until it projects above the headrest (10).

7. Convertible according to one of Claims 1 to 6, **characterized in that** the projection (34) tapers rearwards.

8. Convertible according to one of Claims 1 to 7, **characterized in that** the projection (34) bears at or in the vicinity of its rear end against the upper end (18) of the rollbar (14).

9. Convertible according to one of Claims 1 to 8, **characterized in that** the upper end (18) of the rollbar (14) is provided with a covering (16).

10. Convertible according to one of Claims 1 to 9, **characterized in that** the headrest (10) is extended when a predetermined weight on a seat part of the seat (6) is exceeded.

11. Convertible according to one of Claims 1 to 10, **characterized in that** the rollbar (14) is anchored behind the seat (6) and is separate from the latter.

12. Convertible according to one of Claims 1 to 11, **characterized in that** the headrest (10) is integrated in the backrest (8) of the seat (6).

## Revendications

1. Cabriolet muni d'au moins un siège (6), d'un arceau de sécurité (14) disposé derrière lui, et d'un appui-tête (10) réglable en hauteur indépendamment de l'arceau de sécurité (14), une extrémité supérieure (18) de l'arceau de sécurité (14) étant disposée derrière un appui-tête (10) du siège dans une position de départ et l'appui-tête (10) et l'extrémité supérieure (18) de l'arceau de sécurité (14) pouvant être déplacés l'un par rapport à l'autre afin de permettre un mouvement relatif entre l'extrémité supérieure (18) de l'arceau de sécurité (14) et l'appui-tête (10) dans le cas de l'activation de l'arceau de sécurité (14) ou d'un réglage en hauteur de l'appui-tête (10) depuis la position de départ, **caractérisé en ce que** l'appui-tête (10) est connecté au siège et **en ce qu'**une ligne de joint (26) s'étendant dans la direction latérale et verticale entre l'appui-tête (10) et l'extrémité supérieure (18) de l'arceau de sécurité (14) présente une allure tridimensionnelle telle qu'aucune visibilité n'est possible entre l'appui-tête (10) et l'extrémité supérieure adjacente (18) de l'arceau de sécurité (14), l'appui-tête (10) présentant au moins le long d'une partie de sa délimitation supérieure extérieure (30) une saillie (34) se projetant vers l'arrière, qui chevauche sensiblement horizontalement une partie de l'extrémité supérieure (18) de l'arceau de sécurité (14).

2. Cabriolet selon la revendication 1, **caractérisé en ce que** la ligne de joint (26) présente, à côté de délimitations extérieures visibles (30, 32) de l'appui-tête (10) et de l'extrémité supérieure (18) de l'arceau de sécurité (14) une plus faible épaisseur de joint que dans une région interne (38) disposée entre elles.

3. Cabriolet selon la revendication 1 ou 2, **caractérisé en ce que** l'appui-tête (10) et l'extrémité supérieure (18) de l'arceau de sécurité (14) s'appliquent l'un contre l'autre au niveau de leurs délimitations visibles (30, 32) le long de la ligne de joint (26).

4. Cabriolet selon l'une quelconque des revendications 1 à 3, **caractérisé en ce que** l'appui-tête (10) et l'extrémité supérieure (18) de l'arceau de sécurité (14) présentent la même largeur sensiblement sur toute la hauteur.

5. Cabriolet selon l'une quelconque des revendications 1 à 4, **caractérisé en ce que** l'appui-tête (10) présente au moins le long d'une partie de ses délimitations latérales extérieures (30) une saillie (34) se projetant vers l'arrière, qui chevauche sensiblement verticalement une partie de l'extrémité supérieure (18) de l'arceau de sécurité (14).

6. Cabriolet selon l'une quelconque des revendications 1 à 5, **caractérisé en ce que** la saillie (34) est déformable au moins le long du côté supérieur de l'appui-tête (10) et **en ce que** l'extrémité supérieure (18) de l'arceau de sécurité (14) se déplace vers le haut lors de son activation par déformation de la saillie (34), jusqu'à ce qu'elle dépasse l'appui-tête (10).

7. Cabriolet selon l'une quelconque des revendications 1 à 6, **caractérisé en ce que** la saillie (34) se rétrécit vers l'arrière.

8. Cabriolet selon l'une quelconque des revendications 1 à 7, **caractérisé en ce que** la saillie (34) s'applique au niveau de ou à proximité de son extrémité arrière contre l'extrémité supérieure (18) de l'arceau de sécurité (14).

9. Cabriolet selon l'une quelconque des revendications 1 à 8, **caractérisé en ce que** l'extrémité supérieure (18) de l'arceau de sécurité (14) est pourvue d'un habillage (16).

10. Cabriolet selon l'une quelconque des revendications 1 à 9, **caractérisé en ce que** l'appui-tête (10) est sorti dans le cas du dépassement d'une force de poids prédéfinie sur une partie de siège du siège (6).

11. Cabriolet selon l'une quelconque des revendications 1 à 10, **caractérisé en ce que** l'arceau de sécurité (14) est ancré derrière le siège (6) et de manière séparée de celui-ci.

12. Cabriolet selon l'une quelconque des revendications 1 à 11, **caractérisé en ce que** l'appui-tête (10) est intégré dans le dossier (8) du siège (6).
